# EUROPEAN PATENT APPLICATION

(11) **EP 4 570 656 A1**
(43) Date of publication of application: **18.06.2025**
(21) Application number: 23216768.4
(22) Date of filing: 14.12.2023
(51) Int. Cl.: B64D 11/04

(54) **AIRCRAFT GALLEY**

(71) Applicant: B/E Aerospace (UK) Limited, Leighton Buzzard, Bedfordshire LU7 4TB (GB)
(72) Inventor: GRIFFITHS, Peter Ashley, Kensworth (GB)
(74) Representative: Dehns

(57) **Abstract**

An aircraft galley for an aircraft, the aircraft galley comprising: a storage compartment accessible through an opening; and a door movable between a closed position and an open position, wherein in the closed position the door covers the opening, wherein in the open position the door provides a work surface.

## Description

### FIELD OF THE INVENTION

The invention relates to an aircraft galley, an aircraft galley door assembly and an aircraft.

### BACKGROUND

Aircraft galleys provide storage on aircraft, for example for food and beverages to be consumed by passengers during flight. It is desirable to improve the practicality of aircraft galleys, as well as reducing their weight and volume, and simplifying their structures.

### SUMMARY

In a first aspect there is provided an aircraft galley for an aircraft, the aircraft galley comprising: a storage compartment accessible through an opening; and a door movable between a closed position and an open position, wherein in the closed position the door covers the opening, wherein in the open position the door provides a work surface.

The work surface may be useful for flight attendants to perform tasks needed during flight. Using the door to provide the work surface may provide a more compact, low weight and simple aircraft galley.

In an example, the aircraft galley comprises a frame and hinge, the hinge mounting the door to the frame.

In an example, the hinge defines a door rotation axis.

In an example, the door is rotatable at the hinge to move from the closed position and the open position.

In an example, the hinge is positioned beneath the compartment in use.

In an example, the door rotation axis extends in a lateral direction of the aircraft.

In an example, the door comprises an inner face, the inner face facing the storage compartment when the door is in the closed position.

In an example, the inner face provides the work surface.

In an example, the door is a galley door.

In an example, the galley door provides an external surface of the aircraft galley when the door is in the closed position.

In an example, the aircraft galley comprises a storage container received in the storage compartment.

In an example, the storage container comprises: a container storage compartment accessible through a containing opening; and a container door wherein in a closed position the container door covers the container opening.

In an example, the container door is movable from the closed position to an open position when the door is in the open position.

In an example, when the door is in the open position and the container door is in the open position, the container door is above the work surface.

In an example, wherein the storage container comprises a container hinge, the container hinge mounting the container door to the storage container, wherein the container door is rotatable at the container hinge to move from the closed position to the open position.

In an example, the container hinge defines a container door rotation axis.

In an example, the container door rotation axis extends in a direction substantially normal to the door rotation axis.

In an example, the container door rotation axis extends upwardly in use

According to a second aspect there is provided an aircraft comprising the aircraft galley described above.

According to a third aspect there is provided a kit of parts for the aircraft galley described above.

According to a fourth aspect there is provided a door for an aircraft galley, the aircraft galley comprising a storage compartment accessible through an opening, wherein the door is movable in use between a closed position and an open position, wherein in the closed position the door covers the opening, wherein in the open position the door provides a work surface.

### BRIEF DESCRIPTION OF THE DRAWINGS

Various examples will now be described with reference to the accompanying drawings in which:
Fig. 1 shows a front perspective view of an aircraft galley with a galley door in a closed position;
Fig. 2 shows a front perspective view of the aircraft galley with the galley door omitted and a container door in a closed position;
Fig. 3 shows a front perspective view of the aircraft galley with the galley door in an open position and the container door in a closed position; and
Fig. 4 shows a front perspective view of the aircraft galley with the galley door in the open position and the container door in an open position.

### DETAILED DESCRIPTION

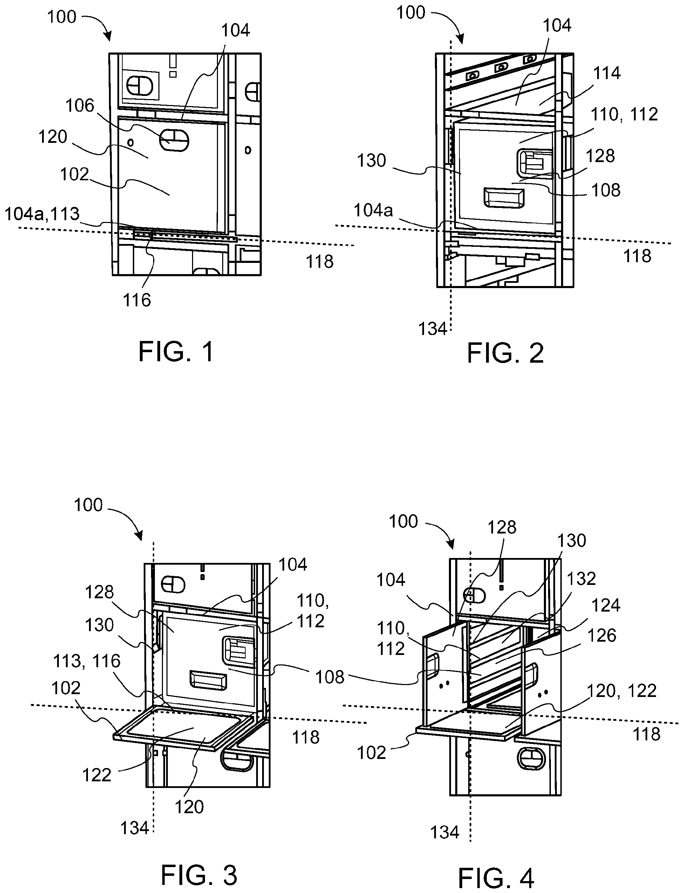

With reference to Fig. 1 to 4 there is shown an aircraft galley 100. The aircraft galley 100 comprises a door 102. The door 102 is a galley door 102. The galley door 102 forms part of an external surface (more specifically, a front surface) of the aircraft galley 100 when the door 102 is in closed positions as shown in Fig. 1.

When the door 102 is in the closed position it covers an opening 108 (visible in Fig. 2 to 4). The opening 108 provides access to a storage compartment 110. The door 102 may be opened (by moving the door 102 from the closed position shown in Fig. 1 to the open position shown in Fig. 3 and 4) to permit a storage container 112 to be inserted into and/or removed from the aircraft galley 100 through the opening 108.

The aircraft galley 100 comprises a frame 104. The frame 104 supports the door 102. When the door 102 is in the closed position, the door 102 abuts the frame 104. The frame 104 further supports at least one internal wall 114 of the aircraft galley 100. The internal wall 114 defines the storage compartment 110.

The storage compartment 110 is substantially cuboidal. The storage compartment 110 has a substantially square cross-section when viewed from the front of the aircraft galley 100. The opening 108 is substantially square. The door 102 has a shape which matches the opening 108. The door 102 is substantially square.

The aircraft galley 100 comprises a latching mechanism 106. The latching mechanism 106 is configured to latch the door 102 in the closed position. The latching mechanism 106 may be released (e.g. by pulling a handle) to unlatch the door 102 and permit the door 102 to move to the open position.

The aircraft galley 100 comprises a hinge 113. The hinge 113 mounts the door 102 to the frame 104. The hinge 113 mounts the door 102 to a mounting bar 104a of the frame 104. The mounting bar 104a extends in a lateral direction of the aircraft. The mounting bar 104a extends in a substantially horizontal (defined with respect to the aircraft) direction in use. The mounting bar 104a is positioned beneath the storage compartment 110 in use. The hinge 113 is positioned at a bottom edge 116 of the door 102.

The door 102 is rotatable about the hinge 113 to move the door 102 from the closed position to the open position. The door 102 is substantially planar. In the closed position the door is in a substantially vertical plane. In the open position the door is in a substantially horizontal plane.

The hinge 113 defines a door rotation axis 118, about which the door 102 rotates from the closed position to the open position. The door rotation axis 118 extends in the lateral direction. The door rotation axis 118 extends in a substantially horizontal direction in use. The door rotation axis 118 is positioned beneath the storage compartment 110 in use. The door rotation axis 118 is positioned at the bottom edge 116 of the door 102. The door rotation axis 118 is positioned at the mounting bar 104a. The door rotation axis 118 is parallel to the mounting bar 104a. The door rotation axis 118 is co-linear with the mounting bar 104a.

The door 102 rotates through substantially 90 degrees from the closed position to the open position. The mounting bar 104a provides a mechanical stop which prevents the door 102 rotating beyond the open position. As the door 102 rotates from the closed position to the open position the door generally moves downwardly. As the door 102 rotates from the closed position to the open position, the door 102 generally moves forwards (outwardly) from the aircraft galley 100. As the door 102 rotates from the closed position to the open position the position of the bottom edge 116 of the door 102 remains substantially unchanged. A distal portion 120 of the door 102 (i.e. distal from the hinge 113 and/or door rotation axis 118) moves downwardly as the door 102 moves from the closed position to the open position. The distal portion 120 of the door 102 moves forwards (outwardly) from the aircraft galley 100.

The door 102 comprises an inner face 122 (visible in Fig 3 and 4). The inner face 122 faces the storage compartment 110 when the door 102 is in the closed position. When the door 102 is in the open position, the door 102 provides a work surface 122. The inner face 122 forms the work surface 122. The work surface 122 is a surface on which a flight attendant may perform a task, for example, preparation of food or a beverage. The work surface 122 is substantially horizontal. The work surface 122 is positioned approximately 1m above an aircraft walkway. The work surface 12 may be greater than or equal to 1m above the aircraft walkway e.g. approximately 1.1m above the aircraft walkway. The task performed by the flight attendant on the work surface 122 may use an item removed from the storage container 112 or from another storage container of the aircraft galley 100 (e.g. an upper storage container positioned above, for example, directly above, the storage container).

The storage container 112 comprises a container storage compartment 124 (positioned inside the container and visible in Fig. 4). The container storage compartment 124 is accessible through a container opening 126. The container opening 126 is at substantially the same position as the opening 108.

The storage container 112 comprises a container door 128. The container door 128 covers the container opening 126 when the container door 128 is in the closed position, as in Fig. 2 and 3. The container door 128 is movable from the closed position to an open position (as shown in Fig. 4). This may permit access to the container storage compartment 124. The door 102 prevents movement of the container door 128 from the closed position when the door 102 is in the closed position. However, when the door 102 is in the open position the container door 128 may be moved from the closed position to the open position. When the container door 128 is in the open position it is above the door 102, more specifically above the work surface 122.

The storage container 112 is substantially cuboidal. The storage container 112 has a substantially square cross-section when viewed from the front of the aircraft galley 100. The container opening 126 is substantially square. The container door 128 has a shape which matches the container opening 126. The container door 128 is substantially square.

The storage container 112 comprises a container hinge 130. The container hinge 130 mounts the container door 128 to the storage container 112. The container hinge 130 mounts the container door 128 to a side 132 of the storage container 112. The side 132 extends in a substantially vertical direction in use. The side 132 is substantially normal to the mounting bar 104a.

The container door 128 is rotatable at the container hinge 130 to move from the closed position to the open position. The container door 128 is substantially planar. In the closed position the container door 128 is in a substantially vertical plane. In the open position the container door 128 is in a substantially vertical plane.

The container hinge 130 defines a container door rotation axis 134, about which the container door 128 rotates from the closed position to the open position. The container door rotation axis 134 extends in a substantially vertical direction in use. The container door rotation axis 134 extends in a direction substantially normal to the door rotation axis 118. The container door rotation axis 134 is positioned at a side of the storage container 112 and the storage compartment 110

In use, with the door 102 in the closed position as in Fig. 1, to open the door 102, the door 102 is rotated from the closed position to the open position as in Fig. 3. The door 102 then provides the work surface 122, which is a substantially horizontal surface to permit a flight attendant to perform a task on the work surface 122. The container door 128 may then be moved to the open position (as in Fig. 4). The door 102 continues to provide the work surface 122 when the container door 128 is the closed position. To closed the door 102, the container door 128 is first returned to the closed position before the door 102 is returned to the closed position.

In the present example the aircraft galley 100 comprises a plurality of doors 102 to provide a plurality of work surfaces 122, more specifically, two doors 102 to provide two work surfaces 122. The doors 102 are adjacent to each other and positioned at substantially the same height, which may mean that their work surfaces 122 form a substantially continuous work surface 122. In other examples, more or fewer doors 102 providing work surfaces 122 may be included. The aircraft galley may comprise doors at different distances above the aircraft walkway, and such doors may not provide work surfaces e.g. with their doors not being horizontal in their open positions due to rotating about a non-horizontalaxis.

In other examples the storage compartment door may be the door which provides the work surface in its open position (e.g. by being substantially horizontal in its open position). In such examples, the opening covered by the storage compartment door is the container opening and the storage compartment accessible through the container opening is the container storage compartment.

Various aspects of the apparatus and methods disclosed in the various embodiments may be used alone, in combination, or in a variety of arrangements not specifically discussed in the embodiments described in the foregoing, and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. An aircraft galley for an aircraft, the aircraft galley comprising:
a storage compartment accessible through an opening; and
a door movable between a closed position and an open position, wherein in the closed position the door covers the opening, wherein in the open position the door provides a work surface.

2. An aircraft galley according to claim 1 and comprising a frame and hinge, the hinge mounting the door to the frame, wherein the door is rotatable at the hinge to move from the closed position and the open position.

3. An aircraft galley according to claim 2, wherein the hinge is positioned beneath the compartment in use.

4. An aircraft galley according to claim 2 or 3, wherein the hinge defines a door rotation axis.

5. An aircraft galley according to claim 4, wherein the door rotation axis extends in a substantially horizontal direction of the aircraft.

6. An aircraft galley according to any preceding claim, wherein the door comprises an inner face, the inner face facing the storage compartment when the door is in the closed position, wherein the inner face provides the work surface.

7. An aircraft galley according to any preceding claim, wherein the door is a galley door, wherein the galley door forms part of an external surface of the aircraft galley when the door is in the closed position.

8. An aircraft galley according to any preceding claim and comprising a storage container received in the storage compartment.

9. An aircraft galley according to claim 8, wherein the storage container comprises:
a container storage compartment accessible through a container opening; and
a container door wherein in a closed position the container door covers the container opening, wherein the container door is movable from the closed position to an open position when the door is in the open position.

10. An aircraft galley according to claim 9, wherein when the door is in the open position and the container door is in the open position, the container door is above the work surface.

11. An aircraft galley according to claim 9 or 10, wherein the storage container comprises a container hinge, the container hinge mounting the container door to the storage container, wherein the container door is rotatable at the container hinge to move from the closed position to the open position.

12. An aircraft galley according to claim 11 when dependent on claim 4, wherein the container hinge defines a container door rotation axis, wherein the container door rotation axis extends in a direction substantially normal to the door rotation axis.

13. An aircraft comprising the aircraft galley according to any preceding claim.

14. A kit of parts for an aircraft galley according to any of claims 1 to 12.

15. A door for an aircraft galley, the aircraft galley comprising a storage compartment accessible through an opening, wherein the door is movable in use between a closed position and an open position, wherein in the closed position the door covers the opening, wherein in the open position the door provides a work surface.
